# EUROPÄISCHE PATENTSCHRIFT

(11) **EP 2 503 189 B1**
(45) Veröffentlichungstag und Bekanntmachung des Hinweises auf die Patenterteilung: **02.03.2016**
(21) Anmeldenummer: 11194199.3
(22) Anmeldetag: 19.12.2011
(51) Int. Cl.: F16H 47/04

(54) **Hydromechanisches Getriebe**
Hydro-mechanical drives
Engrenage hydromécanique

(30) Priorität: 25.03.2011 DE 102011015143; 30.09.2011 DE 102011114624
(43) Veröffentlichungstag der Anmeldung: 26.09.2012
(73) Patentinhaber: CLAAS Industrietechnik GmbH, 33106 Paderborn (DE)
(72) Erfinder: Ratzke, Michael, 33332 Gütersloh (DE); Gohde, Thomas, 33181 Bad Wünnenberg (DE)

(56) Entgegenhaltungen:
- WO-A1-00/32955
- DE-A1- 10 047 402

## Beschreibung

Die vorliegende Erfindung betrifft ein stufenloses hydromechanisches Getriebe, insbesondere zur Verwendung in einem Antriebsstrang eines landwirtschaftlichen Fahrzeugs wie etwa eines Traktors.

Ein hydromechanisches Getriebe umfasst herkömmlicherweise ein mechanisches Verzweigungsgetriebe wie etwa ein Planetengetriebe und ein hydrostatisches Getriebe mit zwei Hydrostateinheiten, die in einem Fluidkreislauf miteinander verbunden sind und von denen jeweils eine als Pumpe und die andere als Motor arbeitet. Indem z.B. bei wenigstens einer dieser beiden hydrostatischen Einheiten durch Schwenken eines Zylinderblocks gegen eine Drehscheibe, an der die Kolben des Zylinderblocks angreifen, das Schluckvolumen der Einheit variiert wird, ist eine stufenlose Verstellung der Übersetzung des hydrostatischen Getriebes realisierbar, und indem das hydrostatische Getriebe mit einem Ausgleichsanschluss des Verzweigungsgetriebes drehverbunden ist, beeinflusst es die Drehzahl einer Ausgangswelle des Verzweigungsgetriebes proportional zu seinem eigenen Übersetzungsverhältnis.

Um Wartung und Reparatur eines solchen hydromechanischen Getriebes zu vereinfachen, und auch, um je nach Anforderungen unterschiedliche Typen von Verzweigungsgetrieben und hydrostatischen Getrieben miteinander kombinieren zu können, ist es wünschenswert, dem hydromechanischen Getriebe einen modularen Aufbau zu geben. Die Schaffung einer befriedigenden modularen Struktur ist jedoch zum einen durch die Notwendigkeit, die Getriebekomponenten auf möglichst kleinem Bauraum unterzubringen, und andererseits durch die enge Verzahnung von Verzweigungsgetriebe und hydrostatischem Getriebe erschwert, die sich aus der Tatsache ergibt, dass beide über mindestens eine Leistung übertragende Verbindung miteinander gekoppelt sein müssen und der Bauraum durch An- und Abtriebswellen, deren Lage durch die Fahrzeuggeometrie vorgegeben wird, eingeschränkt ist.

Aus DE 100 47402 A1 ist ein modular strukturiertes hydromechanisches Getriebe nach dem Oberbegriff des Anspruchs 1 bekannt geworden. Zwar ist dieses herkömmliche Getriebe in eine modulare Planetengetriebebaueinheit und ein Hydrostatmodul gegliedert, doch indem beide zusammen in einem im Wesentlichen hutförmig ausgebildeten, in axialer Richtung der Wellen zu einer Seite hin offenen Gehäuse untergebracht sind, muss zu Wartungszwecken stets der durch das hydromechanische Getriebe hindurch verlaufende Antriebsstrang aufgetrennt und das gesamte hydromechanische Getriebe aus dem Fahrzeug ausgebaut werden. Erst dann ist es z.B. möglich, die Hydrostateinheiten freizulegen, um auf sie zuzugreifen. Entsprechend muss auch bei der Montage eines Fahrzeugs, das ein solches herkömmliches hydromechanisches Getriebe verwendet, das Getriebe erst komplett vormontiert werden, um anschließend in das Fahrzeug eingefügt zu werden. Das hohe Gewicht und die beträchtlichen Ausmaße des hydromechanischen Getriebes machen eine solche Vorgehensweise beschwerlich. Da nur das vollständig montierte Getriebe im Fahrzeug eingesetzt werden kann, ist es nur mit erheblichem logistischen und apparativen Aufwand möglich, unterschiedliche Typen von Hydrostatgetriebe- bzw. Verzweigungsgetriebemodulen nach Kundenwunsch in einem hydromechanischen Getriebe zu kombinieren.

Aufgabe der Erfindung ist, ein hydromechanisches Getriebe zu schaffen, das die oben beschriebenen Nachteile vermeidet.

Die Aufgabe wird gelöst durch ein hydromechanisches Getriebe mit mehreren Wellen, darunter wenigstens einer Antriebswelle und einer Abtriebswelle, mit einem zwischen Antriebswelle und Abtriebswelle angeordneten mechanischen Verzweigungsgetriebe und einem mit dem Verzweigungsgetriebe zusammenwirkenden stufenlos verstellbaren hydrostatischen Getriebe, bei dem ein Trägerrahmen des hydrostatischen Getriebes eine quer zu den Wellen offene Aussparung aufweist, durch die sich wenigstens eine der Wellen erstreckt. Dieser Aufbau erlaubt es, das hydrostatische Getriebe aus einer quer zur Antriebs- und Abtriebswelle kommenden Richtung am Verzweigungsgetriebe zu platzieren, um beide zu dem hydromechanischen Getriebe zusammenzufügen. Genauso kann das hydrostatische Getriebe zu Wartungs- und Reparaturzwecken wieder vom Verzweigungsgetriebe getrennt werden, ohne das dieses ausgebaut werden müsste bzw. ohne dass bei einem das erfindungsgemäße Getriebe verwendenden Fahrzeug der über Antriebs- und Abtriebswelle des Getriebes verlaufende Antriebsstrang des Fahrzeugs aufgetrennt werden müsste.

Eine erste und eine zweite Hydrostateinheit des hydrostatischen Getriebes sind vorzugsweise platzsparend an dem Trägerrahmen auf entgegengesetzten Seiten der Aussparung montiert. D.h., wenn der Tragrahmen im Wesentlichen U-förmig ist und die Aussparung die zwei Schenkel des U voneinander trennt, dann ist vorzugsweise jeweils eine der zwei Hydrostateinheiten an jedem Schenkel montiert.

Jede Hydrostateinheit umfasst in an sich bekannter Weise eine Hydrostatwelle, die, je nach dem, ob die betreffende Hydrostateinheit als Pumpe oder als Motor arbeitet, eine Antriebs- oder Antriebswelle des hydrostatischen Getriebes bildet, einen zum Verstellen des Schluckvolumens um eine zur Hydrostatwelle orthogonale Achse schwenkbaren Zylinderblock und ein Stellglied zum Schwenken des Zylinderblocks, das vorzugsweise ebenfalls an dem Trägerrahmen montiert ist.

Die Hydrostatwellen und die Stellglieder sind, ebenfalls zur Platzersparnis, an dem Trägerrahmen vorzugsweise an den Ecken eines Vierecks angeordnet, durch das sich wenigstens eine der Wellen, d.h. Antriebs- und/oder Abtriebswelle, des hydromechanischen Getriebes, erstreckt.

Energie übertragende Leitungen sind vorzugsweise wenigstens teilweise innerhalb des sich U-förmig um die Aussparung erstreckenden Trägerrahmens geführt und dadurch geschützt. Als Energie übertragende Leitungen kommen insbesondere Hydraulikfluid führende Leitungen in Betracht. Hydraulikfluid führende Leitungen, die die Hydrostateinheiten miteinander verbinden, können vollständig innerhalb des Trägerrahmens geführt sein. Leitungen, die z.B. die Stellglieder oder Ventile des hydrostatischen Getriebes mit Antriebsenergie von außen versorgen, können Hydraulikfluid führende Leitungen oder elektrische Leitungen sein. Diese Leitungen verlaufen nur teilweise innerhalb des Trägerrahmens, zweckmäßigerweise sollten sie zwischen einem innerhalb des Trägerrahmens geführten Abschnitt und einer Durchführung durch ein Außengehäuse auch einen flexiblen Abschnitt umfassen. Das gleiche gilt für Hydraulikfluid führende Leitungen, über die warmes Hydraulikfluid aus dem hydrostatischen Getriebe aus- bzw. kühles Hydraulikfluid in das hydrostatische Getriebe eingespeist wird.

Zwischen den Hydrostateinheiten und Vorgelegewellen des Verzweigungsgetriebes ist vorzugsweise jeweils wenigstens eine Bogenzahnkupplung vorgesehen. Indem diese eine axiale Verlagerung der Vorgelegewellen und der Hydrostatwellen gegeneinander ermöglicht, erleichtert sie das Anfügen des hydrostatischen Getriebes an das Verzweigungsgetriebe bzw. das Trennen der beiden Getriebemodule von einander. Der Trägerrahmen weist vorzugsweise Flanschlager zur Aufnahme der Hydrostateinheiten auf.

Ebenfalls der Platzersparnis wegen ist bevorzugt, dass die Hydrostateinheiten an einer von dem Verzweigungsgetriebe abgewandten Seite des Trägerrahmens angeordnet sind.

Das Verzweigungsgetriebe und das hydrostatische Getriebe sind zweckmäßigerweise in einem gemeinsamen Außengehäuse untergebracht. Dieses Außengehäuse kann einen abnehmbaren Deckel aufweisen. Die Aussparung des Trägerrahmens ist vorzugsweise zu einer von dem Deckel abgewandten Seite des Trägerrahmens hin offen, um einen Ausbau des hydrostatischen Getriebes bei abgenommenem Deckel zu erleichtern.

Der Deckel bildet vorzugweise eine Oberseite des Außengehäuses; so kann der Deckel ohne Gefahr eines Ölaustritts aus dem Außengehäuse abgenommen werden.

Wenn die Stellglieder an einer dem Deckel zugewandten Seite des Trägerrahmens angeordnet sind, sind sie zu Wartungszwecken bei abgenommenem Deckel bequem zugänglich, ohne das dafür das hydrostatische Getriebe aus dem Außengehäuse herausgelöst werden müsste.

Der Trägerrahmen kann in dem Außengehäuse durch quer zu den Wellen orientierte, in das Außengehäuse und den Trägerrahmen eingreifende Lagerstangen fixiert sein. Indem diese Lagerstangen aus Bohrungen des Außengehäuses und des Trägerrahmens herausziehbar sind, kann die Verankerung des Tragerrahmens im Außengehäuse gelöst und das hydrostatische Getriebe entnommen werden.

Um eine hoch belastbare Verankerung zu schaffen, ist vorzugsweise wenigstens eine der Lagerstangen am Trägerrahmen beiderseits der Aussparung und an einander gegenüberliegenden Seitenwänden des AußenGehäuses befestigt.

Wenn diese eine Lagerstange am Trägerrahmen mittels geschraubter Schellen befestigt ist, sollte das Außendgehäuse zweckmäßigerweise verschließbare Öffnungen aufweisen, die auf die Schellen fixierende Schrauben ausgerichtet sind, um diese lösen bzw. anziehen zu können, während der Trägerrahmen in dem Außengehäuse platziert ist.

Um unterschiedliche Typen von Verzweigungsgetrieben und hydrostatischen Getrieben miteinander kombinieren zu können, auch wenn diese sich in ihrer äußeren Gestalt unterscheiden, ist es zweckmäßig, wenn das Außengehäuse in Abschnitte zerlegbar ist, von denen einer das Verzweigungsgetriebe und ein anderer das hydrostatische Getriebe umgibt. So kann durch geeignetes Kombinieren verschiedener Modelle von Außengehäuseabschnitten ein passendes Außengehäuse für jede mögliche Kombination von Modellen des Verzweigungsgetriebes und des hydrostatischen Getriebes geschaffen werden.

Wenn das hydromechanische Getriebe in einem landwirtschaftlichen Fahrzeug eingebaut ist, kann sein Außengehäuse auch einen Ölspeicher für die Ölversorgung eines außerhalb des hydromechanischen Getriebes liegenden Aggregates des Fahrzeugs bilden, z.B. für einen Hydraulikzylinder eines Hebewerkzeugs oder dergleichen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines hydromechanischen Getriebes, an dem die vorliegende Erfindung anwendbar ist;
- Fig. 2: eine perspektivische Ansicht des hydromechanischen Getriebes;
- Fig. 3: eine perspektivische Ansicht des hydrostatischen Getriebes
- Fig. 4: eine perspektivische Ansicht des hydrostatischen Getriebes und eines es umgebenden Gehäuses;
- Fig. 5: einen schematischen Schnitt durch das Gehäuse des hydrostatischen Getriebes;
- Fig. 6: einen schematischen Schnitt durch eine erste elastische Verbindung zwischen dem hydrostatischen Getriebe und dem Gehäuse;
- Fig. 7: einen zu Fig. 5 analogen Schnitt durch eine zweite Verbindung des hydrostatischen Getriebes mit dem Gehäuse;
- Fig. 8: ein Hydraulikdiagramm des hydrostatischen Getriebes;
- Fig. 9: eine Durchführung für Hydraulikfluid durch die Wand des Gehäuses; und
- Fig. 10: einen schematischen Längsschnitt durch eine Leitung der Durchführung.

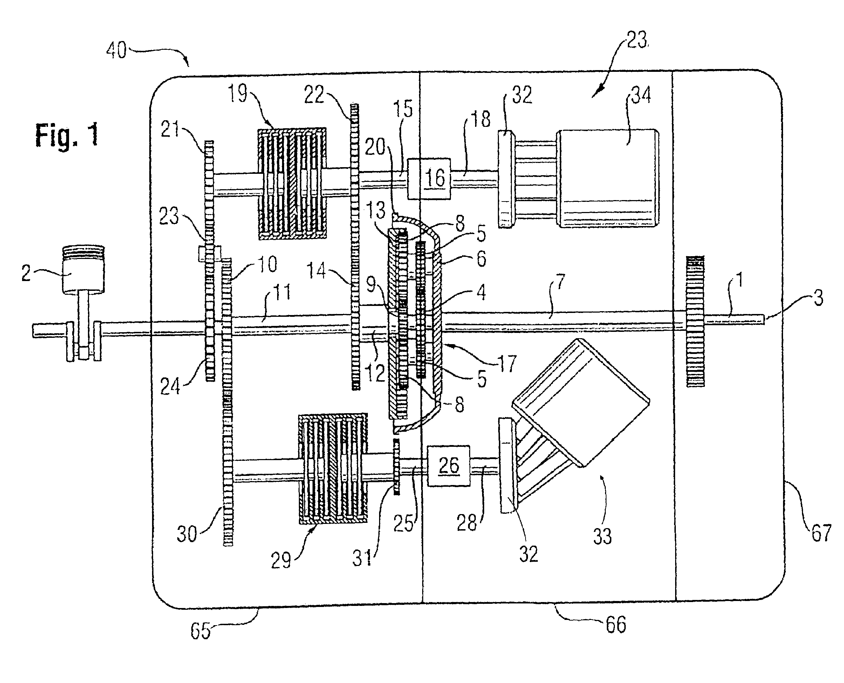

Fig. 1 veranschaulicht in einer schematischen Darstellung Anordnung und Zusammenwirken der beweglichen Teile des erfindungsgemäßen hydromechanischen Getriebes. Eine Antriebswelle 1 des hydromechanischen Getriebes ist mit einem schematisch durch einen an der Antriebswelle 1 angreifenden Kolben angedeuteten Motor 2 verbunden. Die Antriebswelle 1 erstreckt sich längs durch das gesamte Getriebe bis zu einem dem Motor 2 gegenüberliegendem Zapfwellenanschluss 3. Das Verzweigungsgetriebe umfasst im dargestellten Ausführungsbeispiel ein zweistufiges Planetengetriebe 17, von dem ein Sonnenrad 4 in etwa mittig auf der Antriebswelle 1 befestigt ist. Das Sonnenrad 4 kämmt mit Planetenrädern 5, deren Planetenträger 6 fest mit einer Ausgangswelle 7 des Planetengetriebes 17 verbunden ist. Diese Ausgangswelle 7 ist eine zur Antriebswelle 1 koaxiale Hohlwelle. Der Planetenträger 6 trägt gleichzeitig Planetenräder 8 einer zweiten Stufe des Planetengetriebes 17. Jedes der Planetenräder 8 ist mit einem der Planetenräder 5 drehfest verbunden. Die Planetenräder 8 kämmen einerseits mit einem zweiten Sonnenrad 9, das zusammen mit einem Zahnrad 10 drehfest auf einer zweiten um die Antriebswelle 1 drehbaren Hohlwelle 11 sitzt, und andererseits mit einem Hohlrad 13, das über eine die Hohlwelle 11 umgebende weitere Hohlwelle 12 mit einem Zahnrad 14 verbunden ist.

Der Planetenträger 6 umgibt schüsselförmig die Planetenräder 5, 8 und Sonnenräder 4, 9 und das Hohlrad 13 und ist an seinem Außenumfang, in etwa in einer gleichen Ebene mit dem Hohlrad 13, mit einem Zahnkranz 20 versehen.

Eine erste Vorgelegewelle 15 ist von zwei Hohlwellen mit jeweils einem Zahnrad 21, 22 umgeben und weist eine Kupplung 19 zum wahlweise Ankuppeln eines der Zahnräder 21, 22 an die Vorgelegewelle 15 auf. Eine Bogenzahnkupplung 16 verbindet die erste Vorgelegewelle 15 mit einer Welle 18 einer ersten Hydrostateinheit 23. Die Bogenzahnkupplung 16 umfasst in an sich bekannter Weise, wie z.B. in DE-AS 1 208 565, DE-OS 2 355 433 und DE-OS 38 11 790 sowie der GB-A 2 040 397 gezeigt, eine Buchse mit innen liegender Verzahnung und ein bogenverzahntes Ritzel, das winkel- und radial verlagerbar in die Buchse eingreift. Die Bogenzahnkupplung 16 verbindet die Wellen 15, 18 drehmomentschlüssig und erlaubt dabei eine begrenzte Verschiebung der Wellen 15, 18 zueinander in axialer Richtung sowie Schwenkbewegungen der Wellen 15, 18 relativ zueinander um eine zur Längsrichtung der Vorgelegewelle 15 senkrechte Achse.

Das Zahnrad 22 kämmt mit dem an das Sonnenrad 9 gekoppelten Zahnrad 14. Das Zahnrad 21 ist über ein Umkehrrad 27 an ein Zahnrad 24 auf der Antriebswelle 1 gekoppelt.

Analog zur ersten Vorgelegewelle 15 weist auch eine zweite Vorgelegewelle 25 eine Kupplung 29 zum wahlweisen Ankoppeln der Vorgelegewelle 25 an zu ihr koaxiale Zahnräder 30 bzw. 31 auf, und eine Bogenzahnkupplung 26 verbindet die zweite Vorgelegewelle 25 mit einem Wellenabschnitt 28 einer zweiten Hydrostateinheit 33.

Die Hydrostateinheiten 23, 33 sind an sich bekannte Axialkolbeneinheiten mit einer drehfest mit der jeweiligen Welle 18 bzw. 28 verbundenen Drehscheibe 32, an der Kolben eines Zylinderblocks 34 jeweils über Kugelgelenke angreifen. Die Drehung der Drehscheibe 32 verursacht eine oszillierende Bewegung der Kolben, deren Amplitude mit dem Schwenkwinkel des Zylinderblocks 34 relativ zur Welle 18 bzw. 28 zunimmt und das Schluckvolumen der betreffenden Hydrostateinheit 23 bzw. 33 bestimmt. Fig. 1 zeigt die Einheit 23 bei einem minimalen Schwenkwinkel von 0° und die Einheit 33 bei einem maximalen Schwenkwinkel von 45°.

Die Hydrostateinheiten 23, 33 sind untereinander durch zwei in Fig. 1 nicht dargestellte Fluidleitungen im Kreis verbunden, so dass von einer der Einheiten 23, 33 gepumptes Hydraulikfluid die jeweils andere Einheit antreibt. Jede der beiden Einheiten 23, 33 kann sowohl als Pumpe als auch als Motor arbeiten, wobei durch Variieren der Schwenkwinkel der Hydrostateinheiten 23, 33 die Übersetzung des von den zwei Einheiten 23, 33 gebildeten hydrostatischen Getriebes stufenlos veränderbar ist. Die Übersetzung des gesamten hydromechanischen Getriebes hängt von den Schwenkwinkeln der Hydrostateinheiten 13, 33 und von den Stellungen der Kupplungen 19, 29 ab.

Das gesamte hydromechanische Getriebe ist in einem aus mehreren Modulen zusammengesetzten Außengehäuse 40 gekapselt. Die Gehäusemodule, mit 65, 66, 67 bezeichnet, folgen in axialer Richtung der Welle 1 aufeinander. Das erste, zum Motor 2 benachbarte Modul 65 nimmt das Verzweigungsgetriebe, d.h. das Planetengetriebe 17 und die Vorgelegewellen 15, 25 auf, das darauffolgende mittlere Modul 66 das hydrostatische Getriebe mit den Hydrostateinheiten 23, 33, und das dritte Modul 67 ein in der Fig. 1 nicht im Detail dargestellte Getriebestufe und den Zapfwellenanschluss 3.

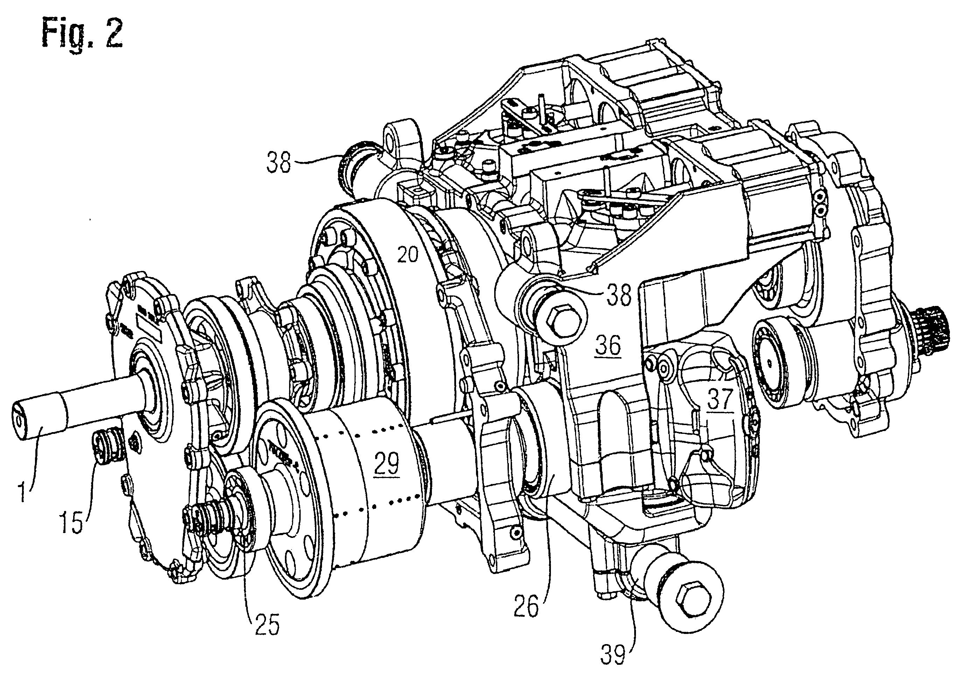

Fig. 2 zeigt eine perspektivische Ansicht des mit Bezug auf Fig. 1 beschriebenen Getriebes. Den rechten Teil der Darstellung der Fig. 2 nimmt das Verzweigungsgetriebe mit den Vorgelegewellen 15, 25 und dem Planetengetriebe 17 ein. Das Verzweigungsgetriebe ist starr in dem Gehäusemodul 65 verbaut.

In einem Trägerrahmen 36 sind (in der Fig. nicht sichtbar) Lager untergebracht, die die Wellen 18, 28 der Hydrostateinheiten 23, 33 halten. An der vom Verzweigungsgetriebe abgewandten Seite des Trägerrahmens 36 sind zwei Gehäuse 37 um vertikal durch die Drehscheiben 32 verlaufende Achsen schwenkbar angelenkt, die jeweils den Zylinderblock einer der beiden Hydrostateinheiten 23, 33 aufnehmen. In Fig. 2 ist nur das Gehäuse 37 der Einheit 33 sichtbar. Die Druckfluidleitungen, die die Hydrostateinheiten 23, 33 miteinander verbinden, verlaufen durch Bohrungen innerhalb des Trägerrahmens 36.

Der Trägerrahmen 36 und das Verzweigungsgetriebe sind unabhängig voneinander im Modul 66 bzw. im Modul 65 des in Fig. 2 nicht gezeigten schallisolierenden Außengehäuses 40 befestigt. Zur Befestigung des Trägerrahmens 36 im Modul 66 dienen horizontal, quer zu den Wellen 1, 15, 25 orientierte und jeweils in Aufnahmen des Trägerrahmens 36 bzw. des Gehäusemoduls 66 eingreifende Stifte 38, 39.

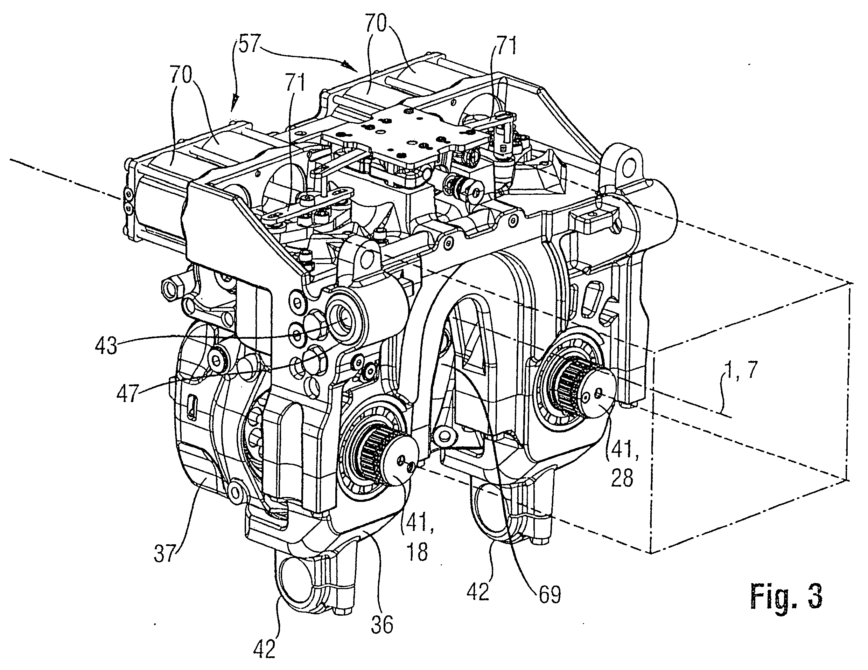

Fig. 3 zeigt eine perspektivische Ansicht des hydrostatischen Getriebes, d.h. des Trägerrahmens 36 und der daran montierten Gehäuse 37, die die hydrostatischen Einheiten 23, 33 enthalten. An der Vorderseite des Trägerrahmens überstehende Spitzen 41 der der Hydrostatwellen 18, 28 sind mit einer Außenverzahnung verstehen, auf die jeweils ein Ritzel der oben erwähnten Bogenzahnkupplungen 16 bzw. 26 aufgesteckt werden. Die Bogenzahnkupplungen vervollständigende Buchsen mit komplementären Aussparungen zu den in Fig. 3 nicht gezeigten Ritzeln der Bogenzahnkupplungen befinden sich an den Enden der in Fig. 3 nicht gezeigten Vorgelegewellen 15, 25.

Eine nach unten offene Aussparung 69 gibt dem Trägerrahmen 36 in etwa die Form eines umgekehrten U. Sie ist vorgesehen, um die Wellen 1, 7 aufzunehmen, die im zusammengebauten Zustand des Getriebes entlang einer in Fig. 3 mit 1,7 bezeichneten gestrichelten Linie verlaufen werden. Die Wellen 18, 28 der Hydrostateinheiten 23, 33 befinden sich auf verschiedenen Seiten der Aussparung 69 auf einem niedrigeren Niveau als die Linie 1,7.

In einem oberen Bereich des Trägerrahmens 36 sind zwei hydraulische Stellglieder 57 angeordnet, die die Schwenkwinkel der hydrostatischen Einheiten 23, 33 steuern. Jedes Stellglied 57 umfasst ein Paar von Hydraulikzylindern 70, deren Kolben jeweils an den Enden eines zweiarmigen Hebels 71 angreifen. Der Hebel 71 ist über eine im Inneren des Trägerrahmens 36 verborgene vertikale Stange mit dem Geläuse 37 der zugeordnete Hydrostateinheit 23 oder 33 verbunden.

Wie in der Fig. 3 angedeutet, sind die Hydrostatwellen 18, 28 und die Stellglieder 57, gesehen entlang der Achse 1, 7, an den vier Ecken eines (in der Fig. durch strickpunktierte Linien angedeuteten) Rechtecks angeordnet. Die Aussparung 69 greift von unten her in das Rechteck ein, so dass die sich durch die Aussparung 68 erstreckenden Wellen 1, 7 das Rechteck etwa mittig kreuzen. So bleibt an der Rückseite des Trägerrahmens 36, zwischen den vom Trägerrahmen 36 nach hinten abstehenden Gehäusen 37 der hydrostatischen Einheiten und Stellgliedern 57, ein Maximum an Platz für an den Wellen 1, 7 angreifende Getriebekomnonenten wie etwa die Getriebeabtriebsstufe und den Zapfwellenanschluss 3 verfügbar.

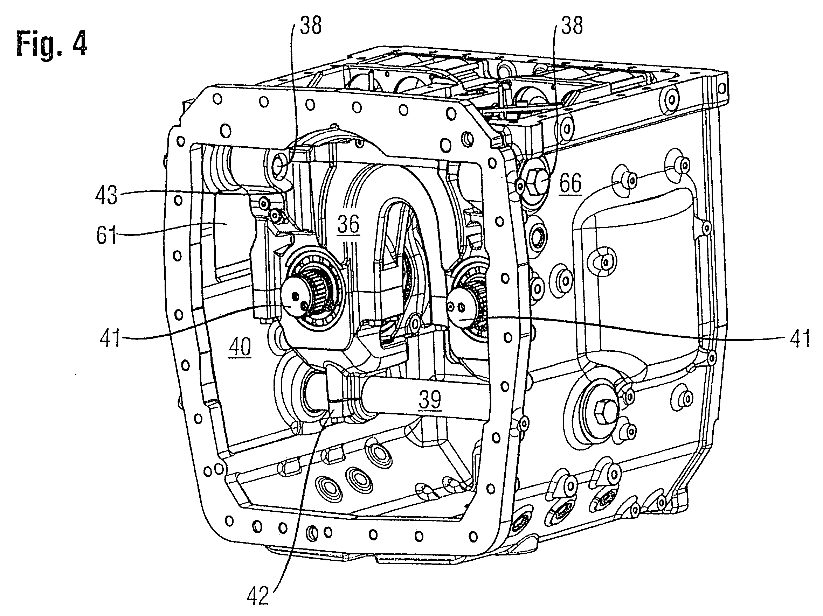

Fig. 4 zeigt in einer perspektivischen Ansicht die Lagerbrücke 36 und das sie umgebende Modul 66 des Außengehäuses 40. Der untere der Stifte, 39, erstreckt sich quer durch das Gehäusemodul 66 und ist in Bohrungen von einander gegenüberliegenden Seitenwänden des Gehäusemoduls 66 gelagert. Von den zwei Schraubschellen 42, die den Trägerrahmen 36 mit dem Stift 39 verbinden, ist eine, unterhalb der hydrostatischen Einheit 33, hinter einer Seitenwand des Gehäusemoduls 66 verborgen. Die Stifte 38 erstrecken sich jeweils nur durch eine Seitenwand des Gehäusemoduls 66 bis in die Bohrungen 43 des Trägerrahmens 36.

Im fertig zusammengebauten Zustand ist die Oberseite des Gehäusemoduls 66 durch einen Deckel dicht verschlossen, der in Fig. 4 nicht dargestellt ist.

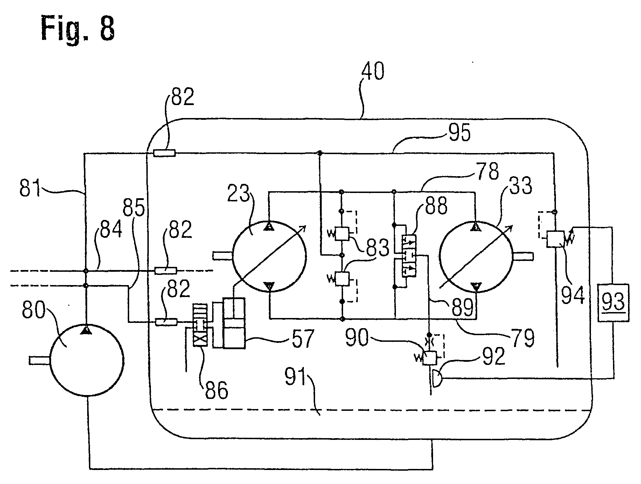

An einer vom Betrachter abgewandten Seitenwand des Gehäuses 40 ist ein Fenster ausgespart. In dem Fenster ist ein Durchführungsrahmen 61 montiert, dessen Funktion später in Verbindung mit Fig. 8 erläutert wird.

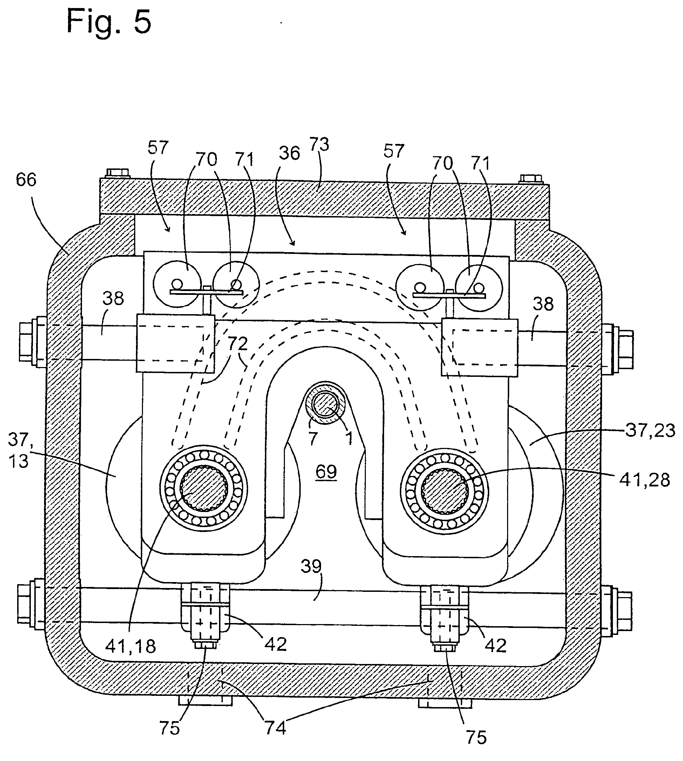

Fig. 5 zeigt einen schematischen Querschnitt durch das Gehäusemodul 66 in zusammengebautem Zustand. Die Wellen 1, 7 erstrecken sich durch die Aussparung 69 des Trägerrahmens 36. Die Hydrostatwellen 18, 28 und sie umgebende Kugellager sind an der Vorderseite des Trägerrahmens 36 zu sehen. Innerhalb des Trägerrahmens 36 verlaufende Hydraulikfluidleitungen 72 sind als gestrichelte Umrisse dargestellt. Die Gehäuse 37 der Hydrostateinheiten 23, 33, die mit den Hydraulikfluidleitungen 72 verbunden sind, sind zum Teil hinter dem Trägerrahmen 36 sichtbar. Das Gehäuse 37 der Hydrostateinheit 33 ist nach außen geschwenkt.

Um zu Wartungs- und Justagezwecken auf die Stellglieder 57 zuzugreifen, genügt es, den Deckel 73 des Gehäusemoduls 66 zu entfernen. Ein Ausbau des gesamten hydrostatischen Getriebes ist möglich, indem Bohrungen 74 im Boden des Gehäusemoduls 66 geöffnet werden, ggf. im Gehäusemodul 66 anstehendes Hydrauliköl abgelassen wird und durch die Bohrungen 74 hindurch Schrauben 75 der Schraubschellen 42 gelockert werden. Dadurch ist es möglich, den Stift 39 in seitlicher Richtung aus dem Gehäusemodul 66 herauszuziehen. Wenn auch die Stifte 38 entfernt sind, genügt es, das hydrostatische Getriebe geringfügig in axialer Richtung, d.h. senkrecht zur Schnittebene der Fig. 5, zu bewegen, um die (in Fig. 5 nicht gezeigten) Bogenzahnkupplungen 16, 26 zu zerlegen, dann kann das hydrostatische Getriebe aus dem Gehäusemodul 66 nach oben herausgehoben werden, während das Verzweigungsgetriebe an seinem Einbauort verbleiben kann.

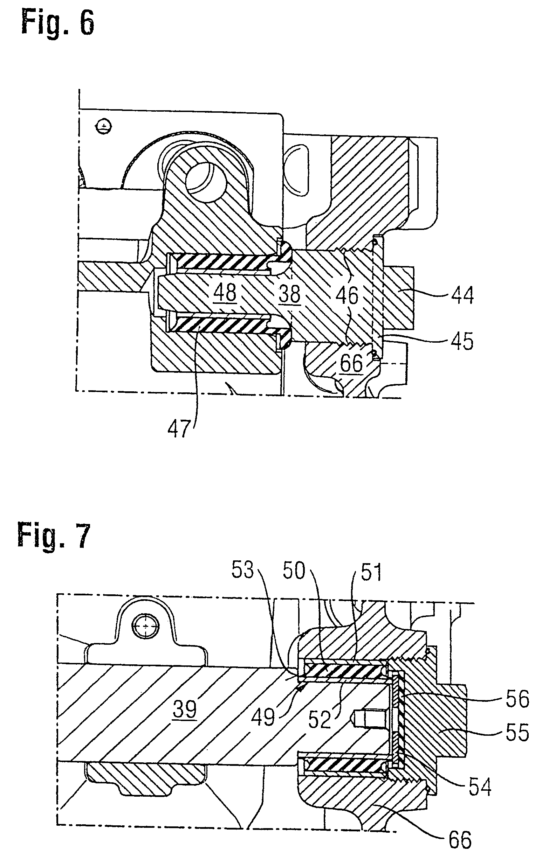

Fig. 6 zeigt einen Schnitt durch einen der sich jeweils nur durch eine Seitenwand des Gehäusemoduls 66 erstreckenden Stifte 38. Der Stift 38 umfasst von außen nach innen einen Schraubsechskant 44, einen mit einem Dichtring versehenen, an Gehäuse 40 anliegenden Flansch 45, einen Gewindeabschnitt 46, der den Stift 38 in der Wand des Gehäuses 40 fixiert, einen Abschnitt mit Wellenpassung, der eine genaue Positionierung des Stiftes 38 im Gehäuse 40 erlaubt, sowie einen in die Bohrung 43 des Trägerrahmens 36 eingreifenden, von einer Elastomerhülse 47 umgebenen Endabschnitt 48. Während der Stift 38 starr mit dem Gehäuse 40 verbunden ist, erlaubt die Elastomerhülse 47 Bewegungen des Trägerrahmens 36 relativ zum Stift 38 und folglich auch relativ zum Gehäuse 40.

Fig. 7 zeigt einen Schnitt durch den unteren, sich durch beide Seitenwände des Gehäusemoduls 66 erstreckenden Stift 39. Die Schellen 42 greifen ohne eine dazwischen liegende Elastomerschicht an dem unteren Stift 39 an. Stattdessen ist auf die geringfügig verjüngten Enden des Stifts 39 jeweils eine sogenannte Ultrabuchse 49 aufgeschoben, die in an sich bekannter Weise jeweils eine Elastomerschicht 50 zwischen starren äußeren und inneren Hülsen 51, 52 aufweist. Zur Fixierung des Stiftes 39 in axialer Richtung wird der Deckel 55 in das Gehäuse 40 eingeschraubt und bringt somit eine axiale Vorspannung auf die Platte 54 auf, die zwischen der Ultrabuchse 49 und dem Deckel 55 geklemmt ist. Die Ultrabuchse 49 wiederum ist am Stift 39 fixiert durch Klemmung ihrer inneren Hülse 52 zwischen einer Schulter 53 des Stifts 39 und der Platte 54. Der Stift 39 greift von innen in den Deckel 55 ein. Die Platte 54 besteht aus einem Elastomer oder aus einem unlösbaren Verbund von einer metallischen Trägerschicht mit einem aufgebrachten Elastomer 56. In einer abgewandelten Lösung können die Platte 54 und die Elastomerschicht 56 aus zwei verschiedenen Bauteilen bestehen. Die Entkopplung des Stiftes 39 mittels der Elastomerschichten 50 und 56 erlaubt zusammen mit der Ultrabuchse 49 gedämpfte Schwingbewegungen des Stifts 39 relativ zum Gehäuse 40 in alle Raumrichtungen.

Fig. 8 ist ein Hydraulikdiagramm des anhand der vorhergehenden Figuren erläuterten hydrostatischen Getriebes. Ein Druckfluidkreislauf umfasst die hydrostatischen Einheiten 23, 33 und diese verbindende Druckfluidleitungen 78, 79, wobei von der Drehrichtung der hydrostatischen Einheiten 23, 33 und davon, welche von beiden als Pumpe und welche als Motor arbeitet, abhängt, welche der beiden Leitungen 78, 79 zu einem gegebenen Zeitpunkt den Hochdruckzweig und welche den Niederdruckzweig des Druckfluidkreislaufs bildet.

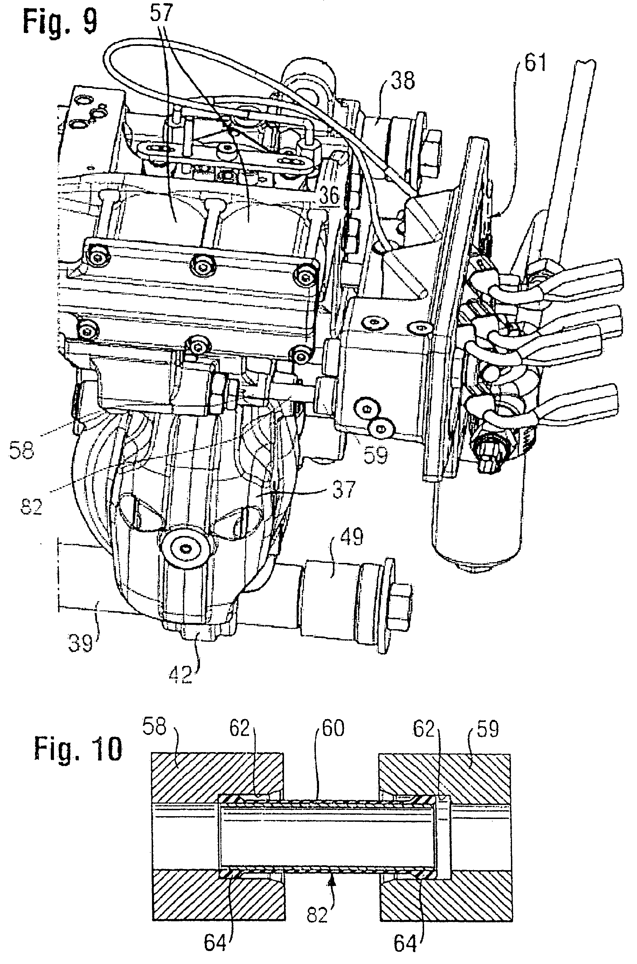

Der Druckfluidkreislauf verliert kontinuierlich Hydrauliköl, z.B. aufgrund von Undichtigkeiten der hydrostatischen Einheiten 23, 33, oder weil es zur Schmierung von Lagern des hydrostatischen Getriebes abgezweigt wird. Außerdem muss in dem Kreislauf zirkulierendes Hydrauliköl kontinuierlich ausgetauscht werden, um eine Überhitzung des Öls zu vermeiden. Eine Speisepumpe, die - über einen nicht dargestellten Ölfilter und Ölkühler - das in dem Druckfluidkreislauf zirkulierende Öl ergänzt, ist mit 80 bezeichnet und kann außerhalb oder innerhalb des Außengehäuses 40 angeordnet sein. Eine Speiseleitung 81 erstreckt sich von einem Hochdruckanschluss der Speisepumpe 80 durch die Wand des Auβengehäuses 40 hindurch und über ein mit Bezug auf Fig. 9 und 10 später noch genauer erläutertes nachgiebiges Zwischenstück 82 zu zwei Druckbegrenzungsventilen 83, die ihrerseits mit einer der Druckfluidleitungen 78,79 verbunden sind. Unter dem Druck des von der Speisepumpe 80 gelieferten Öls öffnet sich jeweils dasjenige der Druckbegrenzungsventile 83, das mit der momentan den Niederdruckzweig bildenden Druckfluidleitung verbunden ist. Auf diese Weise werden Ölverluste des Druckfluidkreislaufs kontinuierlich ausgeglichen.

Von der Speiseleitung 81 zweigen Steuerleitungen 84, 85 ab, die ebenfalls die Wand des Außengehäuses 40 kreuzen und über ein nachgiebiges Zwischenstück 82 zu den hydrostatischen Einheiten 23, 33 zugeordneten Wegeventilen 86 führen, wobei allerdings in der Fig. 8 nur das der hydrostatischen Einheit 23 zugeordnete dargestellt ist. Das Wegeventil 86 steuert den Zufluss von Hydrauliköl zu den (hier als ein doppelt wirkender Stellzylinder dargestellten) Stellgliedern 57, die die Orientierung des Zylinderblocks 34 der hydrostatischen Einheit 23 und damit ihre Schluckmenge einstellen. In einem hier nicht gezeigten Ausführungsbeispiel sind die Stellzylinder 57 zusätzlich mit einer weiteren Druckölversorgung verbunden, die aus einem weiteren fahrzeugseitigen Hydraulikkreislauf bereit gestellt werden kann. Das ermöglicht, dass kurzfristige Spitzen im Volumenstrombedarf der Stellzylinder 57 nicht über die Speisepumpe 80 abdecken muss.

Ein weiteres Wegeventil 88 ist mit den Druckfluidleitungen 78, 79 verbunden und hydraulisch gesteuert, um jeweils diejenige der Druckfluidleitungen 78, 79, die Niederdruck führt, mit einer Ablaufleitung 89 zu verbinden. Diese führt über eine Drossel, hier beispielhaft dargestellt als ein gedrosseltes Druckbegrenzungsventil 90, zu einem Ölsumpf 91 am Boden des Außengehäuses 40. Anstatt zum Ölsumpf 91 könnte die Ablaufleitung auch unmittelbar zum Ölkühler und über diesen zu einem Sauganschluss der Speisepumpe 80 führen, so dass das Öl sofort wieder in den Druckfluidkreislauf eingespeist wird.

Die Temperatur dieses Öls - die mit der Temperatur der hydrostatischen Einheiten 23, 33 gleichgesetzt werden kann - wird von einem an der Ablaufleitung 89 angeordneten Temperatursensor 92 erfasst. Der Temperatursensor ist verbunden mit einem Regelkreis 93, der anhand der erfassten Temperatur den Grenzdruck eines Proportionalventils 94 regelt, das in einem direkt zum Ölsumpf 91 führenden Zweig 95 der Speiseleitung 81 angeordnet ist und über das derjenige Anteil des von der Speisepumpe 80 geförderten Öls, der nicht von dem hydrostatischen Getriebe abgenommen wird, zum Ölsumpf 91 abfließt.

Wenn die von dem Sensor 92 erfasste Öltemperatur niedrig ist und infolgedessen ein langsamer Austausch des zwischen den hydrostatischen Einheiten 23, 33 zirkulierenden Öls genügt, ist der Grenzdruck des Proportionalventils 94 niedrig. Es fließt daher ein großer Teil des von der Speisepumpe 80 geförderten Öls über das Proportionalventil 94 ab. Aufgrund des am Proportionalventil 94 eingestellten niedrigen Grenzdrucks ist die anfallende Verlustleistung gering.

Wenn die Temperatur des Ölkreislaufs hoch ist, stellt der Regelkreis 93 am Proportionalventil 94 einen hohen Druck ein. Infolgedessen wird mehr Öl in den Ölkreislauf hineingedrückt und die Öltemperatur wird wirksam begrenzt.

Der Temperatursensor 92 könnte auch an einer der Druckfluidleitungen 78, 79 angeordnet sein, um die Temperatur des hydrostatischen Getriebes zu erfassen. Alternativ oder ergänzend wäre auch eine Regelung des Proportionalventils 94 anhand der Leistung des hydrostatischen Getriebes möglich, indem z.B. Drucksensoren an den Leitungen 78, 79 angeordnet sind, um die Druckdifferenz zwischen den Leitungen zu erfassen. Um anhand dieser Druckdifferenz die Leistung des hydrostatischen Getriebes zu berechnen, empfängt der Regelkreis 93 von einer übergeordneten Regelung Drehzahl und Schluckmenge einer der beiden hydrostatischen Einheiten 23, 33 (wobei die Schluckmenge durch die Position der der Einheit zugeordneten Stellglieder 57 repräsentiert sein kann). Die Drehzahl der jeweils als Pumpe arbeitenden hydrostatischen Einheit braucht hierfür nicht eigens gemessen zu werden; sie kann in Kenntnis des jeweils an den Kupplungen 19, 29 eingestellten Fahrbereiches und der dadurch implizierten Übersetzungsverhältnissen zwischen Antriebswelle 1 und hydrostatische Einheit 23 oder 33 aus der üblicherweise bekannten Drehzahl der Abtriebswelle 1 berechnet werden.

Fig. 9 veranschaulicht den Durchgang der Speiseleitung 81 und der Steuerleitungen 84, 85 durch das Gehäuse 40 anhand einer perspektivischen Ansicht eines Teils des hydrostatischen Getriebes, des Durchführungsrahmens 61, der das Fenster des Gehäusemoduls 66 dicht ausfüllt, sowie von sich zwischen dem hydrostatischen Getriebe und dem Durchführungsrahmen 61 erstreckenden Teilen der Leitungen 81, 84, 85. Diese Leitungen 81, 84, 85 umfassen jeweils einen am Trägerrahmen 36 festen Abschnitt 58, einen am Durchführungsrahmen 61 festen Abschnitt 59 und das bereits erwähnte nachgiebige Zwischenstück 82, dessen Aufbau in Fig. 10 in einem Längsschnitt gezeigt ist: Die Leitungsabschnitte 58 und 59 sind an ihren Enden zu einer Muffe 62 aufgeweitet, in die ein starrwandiges Rohrstück 60 mit Spiel in axialer und radialer Richtung eingreift. Das Rohrstück 60 ist auf seiner ganzen Länge mit einem Elastomerüberzug 63 versehen, der an den Enden jeweils zu einem an der Innenfläche der Muffe 62 dicht anliegenden Wulst 64 verdickt ist. Die axiale Ausdehnung des Bereichs, in dem der Wulst 64 die Muffe 62 berührt, ist erheblich kleiner als der Durchmesser der Muffe 62, so dass das Rohrstück 60 sich nicht nur in Längsrichtung gegen die Muffen 62 bewegen, sondern auch in beiden Muffen 62 um kleine Winkel schwenken kann. Die Muffen 62 und die darin eingreifenden Enden des Rohrstücks 60 bilden so jeweils eine teleskopische und schwenkbare Verbindung. Die Leitungsabschnitte 59, 58 sind daher in alle Raumrichtungen gegeneinander beweglich, so dass Verlagerungen des gegenüber dem Gehäuse 40 elastisch gelagerten Trägerrahmens 36 ermöglicht werden. Durch den Elastomerüberzug 63 wird das Zwischenstück 82 gegenüber den Leitungsabschnitten 58 und 59 hydraulisch abgedichtet und zudem wird abgesichert, dass keine Schwingungen der Hydrostateinheiten 23, 33 auf das Außengehäuse 40 übertragen werden.

### Bezugszeichen

- 1: Antriebswelle
- 2: Motor
- 3: Zapfwellenanschluss
- 4: Sonnenrad
- 5: Planetenrad
- 6: Planetenträger
- 7: Ausgangswelle
- 8: Planetenrad
- 9: Sonnenrad
- 10: Zahnrad
- 11: Hohlwelle
- 12: Hohlwelle
- 13: Hohlrad
- 14: Zahnrad
- 15: Vorgelegewelle
- 15: Bogenzahnkupplung
- 17: Planetengetriebe
- 18: Hydrostatwelle
- 19: Kupplung
- 20: Zahnkranz
- 21: Zahnrad
- 22: Zahnrad
- 23: hydrostatische Einheit
- 24: Zahnrad
- 25: Vorgelegewelle
- 26: Bogenzahnkupplung
- 27: Umkehrrad
- 28: Hydrostatwelle
- 29: Kupplung
- 30: Zahnrad
- 31: Zahnrad
- 32:
- 33: hydrostatische Einheit
- 34: Zylinderblock
- 35: Gehäuse
- 36: Trägerrahmen
- 37: Gehäuse
- 38: Stift
- 39: Stift
- 40: Außengehäuse
- 41: Spitze der Welle 18 bzw. 28
- 42: Schelle
- 43: Bohrung
- 44: Schraubsechskant
- 45: Flansch
- 46: Gewindeabschnitt
- 47: Elastomerhülse
- 48: Endabschnitt
- 49: Ultrabuchse
- 50: Elastomerschicht
- 51: äußere Hülse
- 52: innere Hülse
- 53: Schulter
- 54: Platte
- 55: Deckel
- 56: Elastomerscheibe
- 57: Stellglied
- 58: Leitungsabschnitt
- 59: Leitungsabschnitt
- 60: Rohrstück
- 61: Durchführungsrahmen
- 62: Muffe
- 63: Elastomerüberzug
- 64: Wulst
- 65: Gehäusemodul
- 66: Gehäusemodul
- 67: Gehäusemodul
- 68: Flansch
- 69: Aussparung
- 70: Hydraulikzylinder
- 71: Hebel
- 72: Hydraulikfluidleitung
- 73: Deckel
- 74: Bohrung
- 75: Schraube
- 78: Druckfluidleitung
- 79: Druckfluidleitung
- 80: Speisepumpe
- 81: Speiseleitung
- 82: nachgiebige Verbindung
- 83: Druckbegrenzungsventilen
- 84: Steuerleitung
- 85: Steuerleitung
- 86: Wegeventil
- 87:
- 88: Wegeventil
- 89: Ablaufleitung
- 90: Druckbegrenzungsventil
- 91: Ölsumpf
- 92: Temperatursensor
- 93: Regelkreis
- 94: Proportionalventil
- 95: Zweig

## Patentansprüche

1. Hydromechanisches Getriebe mit mehreren Wellen (1, 7), darunter wenigstens einer Antriebswelle (1), einer Abtriebswelle (7), mit einem zwischen Antriebswelle (1) und Abtriebswelle (7) angeordneten mechanischen Verzweigungsgetriebe (17, 15, 25) und einem mit dem Verzweigungsgetriebe (17, 15, 25) zusammenwirkenden stufenlos verstellbaren hydrostatischen Getriebe (23, 33, 36), **dadurch gekennzeichnet, dass** ein Trägerrahmen (36) des hydrostatischen Getriebes (23, 33, 36) eine quer zu den Wellen (1, 7) offene Aussparung (69) aufweist, durch die sich wenigstens eine der Wellen (1, 7) erstreckt.

2. Hydromechanisches Getriebe nach Anspruch 1, **dadurch gekennzeichnet, dass** eine erste und eine zweite Hydrostateinheit (23, 33) des hydrostatischen Getriebes (23, 33, 36) an dem Trägerrahmen (36) auf entgegengesetzten Seiten der Aussparung (69) montiert sind.

3. Hydromechanisches Getriebe nach Anspruch 1 oder 2, **dadurch gekennzeichnet, dass** jede Hydrostateinheit (23; 33) eine Hydrostatwelle (18; 28), einen um eine zur Hydrostatwelle (18; 28) orthogonale Achse schwenkbaren Zylinderblock (34) und ein Stellglied (57) zum Schwenken des Zylinderblocks (34) aufweist, das an dem Trägerrahmen (36) montiert ist.

4. Hydromechanisches Getriebe nach einem der vorhergehenden Ansprüche, **dadurch gekennzeichnet, dass** der Tragrahmen (36) sich U-förmig um die Aussparung (69) und die wenigstens eine durch die Aussparung (69) verlaufende Welle (1, 7) erstreckt, und dass Energie übertragende Leitungen (72) wenigstens teilweise innerhalb des Trägerrahmens (36) geführt sind.

5. Hydromechanisches Getriebe nach einem der vorhergehenden Ansprüche, **dadurch gekennzeichnet, dass** zwischen den Hydrostateinheiten (23; 33) und Vorgelegewellen (15; 25) des Verzweigungsgetriebes (17, 15, 25) jeweils wenigstens eine Bogenzahnkupplung (16; 26) vorgesehen ist.

6. Hydromechanisches Getriebe nach einem der vorhergehenden Ansprüche, **dadurch gekennzeichnet, dass** der Trägerrahmen (36) Flanschlager zur Aufnahme der Hydrostateinheiten bildet.

7. Hydromechanisches Getriebe nach einem der vorhergehenden Ansprüche, **dadurch gekennzeichnet, dass** die Hydrostateinheiten (23; 33) an einer von dem Verzweigungsgetriebe (17, 15, 25) abgewandten Seite des Trägerrahmens (36) angeordnet sind.

8. Hydromechanisches Getriebe nach einem der vorhergehenden Ansprüche, **dadurch gekennzeichnet, dass** das Verzweigungsgetriebe (17, 15, 25) und das hydrostatische Getriebe (23, 33, 36) in einem gemeinsamen Außengehäuse (40) untergebracht sind, das einen abnehmbaren Deckel (73) aufweist, und dass die Aussparung (69) des Trägerrahmens (36) zu einer von dem Deckel (73) abgewandten Seite des Trägerrahmens (36) hin offen ist.

9. Hydromechanisches Getriebe nach Anspruch 8, **dadurch gekennzeichnet, dass** der Deckel (73) eine Oberseite des Außengehäuses (40) bildet.

10. Hydromechanisches Getriebe nach Anspruch 8 oder 9, soweit auf Anspruch 3 rückbezogen, **dadurch gekennzeichnet, dass** die Stellglieder (57) an einer dem Deckel (73) zugewandten Seite des Trägerrahmens (36) angeordnet sind.

11. Hydromechanisches Getriebe nach einem der Ansprüche 8 bis 10, **dadurch gekennzeichnet, dass** der Trägerrahmen (36) in dem Außengehäuse (40) durch quer zu den Wellen (1, 7) orientierte, in das Außengehäuse (40) und den Trägerrahmen (36) herausziehbar eingreifende Lagerstangen (38; 39) fixiert ist.

12. Hydromechanisches Getriebe nach Anspruch 11, **dadurch gekennzeichnet, dass** eine der Lagerstangen (39) am Trägerrahmen (36) beiderseits der Aussparung (69) und an einander gegenüberliegenden Seitenwänden des Außengehäuses (40) befestigt ist.

13. Hydromechanisches Getriebe nach Anspruch 12, **dadurch gekennzeichnet, dass** die eine Lagerstange (39) am Trägerrahmen (36) mittels geschraubter Schellen (42) befestigt ist, und dass das Außengehäuse (40) verschließbare Öffnungen (74) aufweist, die auf die Schellen (42) fixierende Schrauben (75) ausgerichtet sind.

14. Hydromechanisches Getriebe nach einem der Ansprüche 8 bis 13, **dadurch gekennzeichnet, dass** das Außengehäuse (40) in Abschnitte (65, 66, 67) zerlegbar ist, von denen einer (65) das Verzweigungsgetriebe (17, 15, 25) und ein anderer das hydrostatische Getriebe (23, 33, 36) umgibt.

15. Landwirtschaftliches Fahrzeug mit einem hydromechanischen Getriebe nach einem der Ansprüche 8 bis 14, **dadurch gekennzeichnet, dass** das Außengehäuse einen Ölspeicher für die Ölversorgung eines außerhalb des hydromechanischen Getriebes liegenden Aggregats des Fahrzeugs bildet.

## Claims

1. A hydromechanical transmission comprising a plurality of shafts (1, 7), among same at least a drive shaft (1), an output shaft (7), with a mechanical distribution transmission (17, 15, 25) arranged between the drive shaft (1) and the output shaft (7) and a steplessly adjustable hydrostatic transmission (23, 33, 36) cooperating with the distribution transmission (17, 15, 25), **characterised in that** a carrier frame (36) of the hydrostatic transmission (23, 33, 36) has an opening (69) which is open transversely relative to the shafts (1, 7) and through which at least one of the shafts (1, 7) extends.

2. A hydromechanical transmission according to claim 1 **characterised in that** a first and a second hydrostatic unit (23, 33) of the hydrostatic transmission (23, 33, 36) are mounted to the carrier frame (36) on opposite sides of the opening (69).

3. A hydromechanical transmission according to claim 1 or claim 2 **characterised in that** each hydrostatic unit (23; 33) has a hydrostatic shaft (18; 28), a cylinder block (34) pivotable about an axis orthogonal relative to the hydrostatic shaft (18; 28) and an adjusting member (57) for pivoting the cylinder block (34), that is mounted to the carrier frame (36).

4. A hydromechanical transmission according to one of the preceding claims **characterised in that** the carrier frame (36) extends in a U-shape around the opening (69) and the at least one shaft (1, 7) extending through the opening (69) and that energy-transmitting lines (72) are guided at least partially within the carrier frame (36).

5. A hydromechanical transmission according to one of the preceding claims **characterised in that** at least one respective curved-tooth coupling (16; 26) is provided between the hydrostatic units (23; 33) and lay shafts (15; 25) of the distribution transmission (17, 15, 25).

6. A hydromechanical transmission according to one of the preceding claims **characterised in that** the carrier frame (36) forms flange mountings for receiving the hydrostatic units.

7. A hydromechanical transmission according to one of the preceding claims **characterised in that** the hydrostatic units (23; 33) are arranged at a side of the carrier frame (36), that is remote from the distribution transmission (17, 15; 25).

8. A hydromechanical transmission according to one of the preceding claims **characterised in that** the distribution transmission (17, 15, 25) and the hydrostatic transmission (23, 33, 36) are disposed in a common external housing (40) which has a removable cover (73) and the opening (69) of the carrier frame (36) is open towards a side of the carrier frame (36), that is remote from the cover (73).

9. A hydromechanical transmission according to claim 8 **characterised in that** the cover (73) forms a top side of the external housing (40).

10. A hydromechanical transmission according to claim 8 or claim 9 when appended to claim 3 **characterised in that** the adjusting member (57) is arranged at a side of the carrier frame (36), that is towards the cover (73).

11. A hydromechanical transmission according to one of claims 8 to 10 **characterised in that** the carrier frame (36) is fixed in the external housing (40) by mounting bars (38; 39) which are oriented transversely relative to the shafts (1, 7) and which engage into the external housing (40) and the carrier frame (36) in such a way that they can be withdrawn therefrom.

12. A hydromechanical transmission according to claim 11 **characterised in that** one of the mounting bars (39) is fixed to the carrier frame (36) at both sides of the opening (69) and at mutually opposite side walls of the external housing (40).

13. A hydromechanical transmission according to claim 12 **characterised in that** the one mounting bar (39) is fixed to the carrier frame (36) by means of screwed clamps (42) and the external housing (40) has closable openings (74) aligned with screws (75) fixing the clamps (42).

14. A hydromechanical transmission according to one of claims 8 to 13 **characterised in that** the external housing (40) can be disassembled into portions (65, 66, 67) of which one (65) surrounds the distribution transmission (17, 15, 25) and another surrounds the hydrostatic transmission (23, 33, 36).

15. An agricultural vehicle comprising a hydromechanical transmission according to one of claims 8 to 14 **characterised in that** the external housing forms an oil storage means for the oil supply for a unit of the vehicle, that is outside the hydromechanical transmission.

## Revendications

1. Transmission hydromécanique comprenant plusieurs arbres (1, 7) dont au moins un arbre menant (1), un arbre mené (7), une transmission mécanique à répartition de puissance (17, 15, 25) disposée entre l'arbre menant (1) et l'arbre mené (7), et une transmission hydrostatique à réglage progressif (23, 33, 36) coopérant avec la transmission à répartition de puissance (17, 15, 25), **caractérisée en ce qu'**un châssis porteur (36) de la transmission hydrostatique (23, 33, 36) comporte un évidement (69) qui est ouvert transversalement aux arbres (1, 7) et à travers lequel s'étend au moins un des arbres (1, 7).

2. Transmission hydromécanique selon la revendication 1, **caractérisée en ce qu'**une première et une seconde unité hydrostatique (23, 33) de la transmission hydrostatique (23, 33, 36) sont montées sur le châssis porteur (36) sur des côtés opposés de l'évidement (69).

3. Transmission hydromécanique selon la revendication 1 ou 2, **caractérisée en ce que** chaque unité hydrostatique (23 ; 33) comporte un arbre hydrostatique (18 ; 28), un bloc-cylindre (34) pivotant autour d'un axe orthogonal à l'arbre hydrostatique (18 ; 28), et un organe de positionnement (57) destiné à faire pivoter le bloc-cylindre (34) et monté sur le châssis porteur (36).

4. Transmission hydromécanique selon une des revendications précédentes, **caractérisée en ce que** le châssis porteur (36) s'étend en forme de U autour de l'évidement (69) et du au moins un arbre (1, 7) s'étendant à travers l'évidement (69), et **en ce que** des conduites (72) transférant de l'énergie passent au moins partiellement à l'intérieur du châssis porteur (36).

5. Transmission hydromécanique selon une des revendications précédentes, **caractérisée en ce qu'**entre les unités hydrostatiques (23 ; 33) et des arbres intermédiaires (15 ; 25) de la transmission à répartition de puissance (17, 15, 25) est prévu à chaque fois au moins un accouplement à denture bombée (16 ; 26).

6. Transmission hydromécanique selon une des revendications précédentes, **caractérisée en ce que** le châssis porteur (36) forme des paliers à bride pour recevoir les unités hydrostatiques.

7. Transmission hydromécanique selon une des revendications précédentes, **caractérisée en ce que** les unités hydrostatiques (23 ; 33) sont disposées sur un côté du châssis porteur (36) orienté à l'opposé de la transmission à répartition de puissance (17, 15, 25).

8. Transmission hydromécanique selon une des revendications précédentes, **caractérisée en ce que** la transmission à répartition de puissance (17, 15, 25) et la transmission hydrostatique (23, 33, 36) sont logées dans un carter extérieur commun (40) qui comporte un couvercle amovible (73), et **en ce que** l'évidement (69) du châssis porteur (36) est ouvert en direction d'un côté du châssis porteur (36) orienté à l'opposé du couvercle (73).

9. Transmission hydromécanique selon la revendication 8, **caractérisée en ce que** le couvercle (73) forme un dessus du carter extérieur (40).

10. Transmission hydromécanique selon la revendication 8 ou 9 pour autant que rattachées à la revendication 3, **caractérisée en ce que** les organes de positionnement (57) sont disposés sur un côté du châssis porteur (36) orienté vers le couvercle (73).

11. Transmission hydromécanique selon une des revendications 8 à 10, **caractérisée en ce que** le châssis porteur (36) est immobilisé dans le carter extérieur (40) par l'intermédiaire de barres de fixation (38 ; 39) orientées transversalement aux arbres (1, 7) et engagées de manière extractible dans le carter extérieur (40) et dans le châssis porteur (36).

12. Transmission hydromécanique selon la revendication 11, **caractérisée en ce qu'**une des barres de fixation (39) est fixée au châssis porteur (36) de part et d'autre de l'évidement (69) et à des parois latérales en vis-à-vis du carter extérieur (40).

13. Transmission hydromécanique selon la revendication 12, **caractérisée en ce que** l'une des barres de fixation, (39), est fixée au châssis porteur (36) au moyen de colliers vissés (42), et **en ce que** le carter extérieur (40) est pourvu d'ouverture obturables (74) qui sont orientées en direction des vis (75) bloquant les colliers (42).

14. Transmission hydromécanique selon une des revendications 8 à 13, **caractérisée en ce que** le carter extérieur (40) est démontable en portions (65, 66, 67) dont une (65) entoure la transmission à répartition de puissance (17, 15, 25) et une autre entoure la transmission hydrostatique (23, 33, 36).

15. Véhicule agricole comprenant une transmission hydromécanique selon une des revendications 8 à 14, **caractérisé en ce que** le carter extérieur forme un réservoir d'huile pour l'alimentation en huile d'un sous-ensemble du véhicule disposé à l'extérieur de la transmission hydromécanique.
